# EUROPÄISCHE PATENTSCHRIFT

(11) **EP 1 238 893 B1**
(45) Veröffentlichungstag und Bekanntmachung des Hinweises auf die Patenterteilung: **15.08.2007**
(21) Anmeldenummer: 02003021.9
(22) Anmeldetag: 12.02.2002
(51) Int. Cl.: B62D 25/12, B60R 21/34

(54) **Anordnung einer Frontklappe an einem Fahrzeug**
Front bonnet for a vehicle
Capot avant pour véhicule

(30) Priorität: 08.03.2001 DE 10111096
(43) Veröffentlichungstag der Anmeldung: 11.09.2002
(73) Patentinhaber: Bayerische Motoren Werke Aktiengesellschaft, 80809 München (DE)
(72) Erfinder: Köstler, Ulrich, 85241 Hebertshausen (DE); Lindermaier, Robert, 85399 Hallbergmoos (DE)

(56) Entgegenhaltungen:
- DE-A- 10 033 200
- DE-A- 19 712 961
- DE-A- 19 922 454

## Beschreibung

### Anordnung einer Frontklappe an einem Fahrzeug

Die Erfindung betrifft eine Anordnung einer Frontklappe an einem Fahrzeug nach dem Oberbegriff der Patentansprüche 1 und 7.

Um bei einer Kollision eines Fußgängers mit einem Kraftfahrzeug das Ausmaß von Verletzungen, insbesondere im Brust- und Kopfbereich, zu minimieren, ist es bekannt, den fahrtrichtungsabgewandten, hinteren Bereich der Frontklappe im Fall einer Fußgängerkollision anzuheben. Hierdurch wird ein Abstand der Frontklappe zur steifen Unterstruktur des Fahrzeuges (Motor, Federbeinaufnahmen, etc.) erzeugt, so dass an der Frontklappe ein Deformationsweg zur Verfügung steht.

Aus der DE 199 22 454 A ist eine Anordnung einer Frontklappe eines Fahrzeugs bekannt, die über mindestens ein Scharnier an den Rahmen des Fahrzeugs angelenkt ist. Die Frontklappe ist über wenigstens ein Klappenschloss verschließbar. Das Scharnier ist zur Ausführung einer Schwenkbewegung der Frontklappe um eine durch das Klappenschloss definierte horizontale Achse herum ausgebildet.

Ferner ist aus der DE 197 12 961 A1 eine Frontklappe mit einem derartigen aktiven Fußgängeraufprallschutz bekannt, die im Bereich der Windschutzscheibe angelenkt ist. Für den Fall einer Fehlauslösung, beispielsweise durch eine leichte Kollision mit festen Gegenständen oder bei einer Kollision ohne Beschädigung am Fahrzeug, wird allerdings nicht näher offenbart, wie die Frontklappe problemlos wieder in ihre Ausgangslage gebracht werden kann. Die bekannten aktiven Systeme weisen keine Mechanismen zur einfachen, manuellen Reversierung auf.

Aufgabe der Erfindung ist es, die bekannte Frontklappe mit einem aktiven Fußgängeraufprallschutz so weiterzubilden, dass die Frontklappe nach einer Auslösung des aktiven Fußgängeraufprallschutzsystems ohne Hilfsmittel wieder in ihre Ausgangslage zurückverlagert werden kann.

Diese Aufgabe wird durch die Merkmale der Patentansprüche 1 oder 7 gelöst.

Eine Frontklappe an einem Fahrzeug weist eine Einrichtung auf, die sich bei einer Kollision des Fahrzeugs mit einem Fußgänger aus einer geschlossenen Ausgangslage in eine angehobene Position verlagert, und dabei zumindest eine Hinterkante der Frontklappe anhebt. Diese Einrichtung ist benachbart zu einem Scharnier an der Karosserie angebracht, das zumindest ein nach oben Schwenken der Frontklappe beim normalen Öffnen um eine in Fahrtrichtung gesehen im hinteren Bereich der Frontklappe angeordnete Achse ermöglicht. Kerngedanke der Erfindung ist es, dass ein Mechanismus zur Rückführung der Einrichtung aus der angehobenen Position in die geschlossene Ausgangslage vorgesehen ist. Dieser Mechanismus schafft bei einem normalen Öffnen und / oder Schließen der an der Hinterkante angehobenen Frontklappe eine weitere Anlenkung der an der Hinterkante angehobenen Frontklappe an die Karosserie. Der Abschnitt der Frontklappe zwischen dieser weiteren Anlenkung und einer Vorderkante, an der eine Handkraft zum Öffnen und / oder Schließen eingeleitet wird, dient dabei als langer Hebel für den Mechanismus. Dies ist eine nutzerfreundliche und kostengünstige einfache Möglichkeit, eine aktive Frontklappe ohne Zuhilfenahme von Werkzeugen zu reversieren. Jeder Fahrzeugnutzer ist dadurch in der Lage, die Reversierung eigenhändig und mit geringem Kraftaufwand in kurzer Zeit und durch ihm bekannte Vorgänge am Fahrzeug durchzuführen.

Günstigerweise ist das Scharnier vor einer Hinterkante der Frontklappe angeordnet. Die Hinterkante wird beim normalen Öffnen und / oder Schließen durch einen Eingriff des Mechanismus zusätzlich geführt. Dieser Eingriff des Mechanismus stellt so die Anlenkung des durch die Frontklappe gebildeten Hebels dar. Eine besonders einfache Ausführung dieses Eingriffs besteht aus einer Kulissenbahn, in der die Hinterkante der Frontklappe selbst oder ein fest mit der Hinterkante verbundenes Führungselement geführt ist.

Eine weitere, ebenfalls sehr günstige Ausführung des Mechanismus ist in eine sowohl klappen- als auch karosserieseitig vor dem Scharnier angelenkte Öffnungshilfe integriert. Diese Öffnungshilfe dient in ihrem vollständig geöffneten Zustand als zusätzliche Anlenkung. Dies ist eine besonders elegante und robuste Möglichkeit zur Reversierung einer aktiven Frontklappe, die zusätzlich noch eine Öffnungshilfe aufweist.

Eine alternative vorteilhafte Ausführung weist erfindungsgemäß ein Scharnier auf, das in einem Drehpunkt zur Frontklappe einen begrenzten Schwenkbereich hat. Bei einem weiteren normalen Öffnen der an der Hinterkante angehobenen Frontklappe über den begrenzten Schwenkbereich hinaus wird zumindest der über den Drehpunkt angelenkte Gelenkarm des Scharniers mit der Frontklappe mitbewegt. Dieser Gelenkarm drückt dann als kurzer Hebel um eine Anlenkung des Scharniers an die Karosserie auf die Einrichtung, und führt diese aus der angehobenen Position in die geschlossene Ausgangslage zurück, wenn die Frontklappe als langer Hebel per Handkraft, die an ihrer Vorderkante angreift, weiter geöffnet wird. Dies ist eine sehr einfache und damit besonders solide Ausführung.

Weitere vorteilhafte Ausgestaltungen sind Gegenstand von Unteransprüchen.

In der Zeichnung sind drei mögliche Ausführungsbeispiele der Erfindung dargestellt, die im folgenden näher beschrieben werden. Es zeigen in schematischer Darstellungsweise:
- Fig. 1: eine Seitenansicht einer aktiven Frontklappe mit einem Kulissenmechanismus im geschlossenen Ausgangszustand,
- Fig. 2: eine Seitenansicht der in Fig. 1 gezeigten Frontklappe nach einer Kollision,
- Fig. 3: eine Seitenansicht der in Fig. 2 gezeigten Frontklappe in einer halbgeöffneten Stellung,
- Fig. 4: eine Seitenansicht der in Fig. 3 gezeigten Frontklappe in einer fast vollständig geöffneten Stellung,
- Fig. 5: eine Seitenansicht der in Fig. 4 gezeigten Frontklappe in einer vollständig geöffneten Stellung,
- Fig. 6: eine Seitenansicht der in Fig. 5 gezeigten Frontklappe in einer halbgeschlossenen Stellung,
- Fig. 7: eine Seitenansicht einer aktiven Frontklappe mit einem Scharnier mit einer Gasfeder als Öffnungshilfe nach einer Kollision,
- Fig. 8: eine Seitenansicht der in Fig. 7 gezeigten Frontklappe in einer geöffneten Stellung,
- Fig. 9: eine Seitenansicht einer aktiven Frontklappe mit einem Scharnier mit einem Drehpunkt zur Frontklappe mit einem begrenzten Schwenkbereich im geschlossenen Zustand,
- Fig. 10: eine Seitenansicht der in Fig. 9 gezeigten Frontklappe nach einer Kollision und
- Fig. 11: eine Seitenansicht der in Fig. 10 gezeigten Frontklappe in einer geöffneten Stellung.

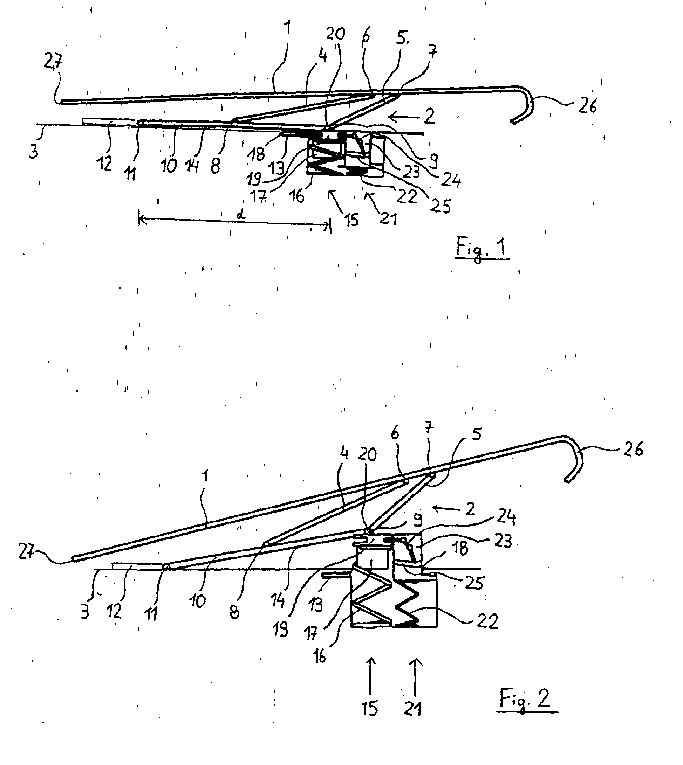

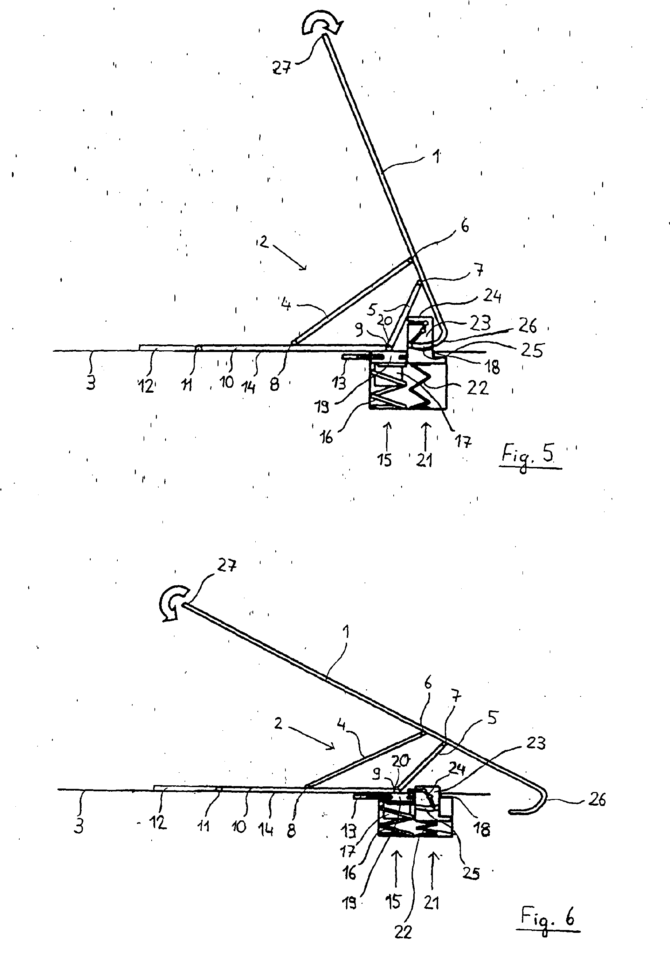

Die Fig. 1 bis 6 zeigen jeweils eine Seitenansicht einer Frontklappe 1 eines Kraftfahrzeugs. Die Frontklappe 1 ist über ein in seiner Gesamtheit mit 2 bezeichneten Scharnier an einem Stützträger 3 für einen nicht dargestellten Kotflügel gelagert. Das Scharnier 2 ist als Viergelenk mit einem vorderen und einem hinteren Gelenkarm 4 bzw. 5 ausgebildet und ermöglicht eine Öffnung der Frontklappe 1 wie in Fig. 4 abgebildet. Die Frontklappe 1 ist hierbei, in Fahrtrichtung betrachtet, in ihrem hinteren Bereich angeschlagen und öffnet sich von der Fahrzeugvorderseite her. Die Gelenkarme 4 und 5 sind einerseits über Gelenke 6 und 7 an der Frontklappe 1 und andererseits über Gelenke 8 und 9 an einem Scharnierträger 10 angelenkt. Der Scharnierträger 10 ist an seinem vorderen Endabschnitt über eine Drehachse 11 mit einer Anschraubplatte 12 gelenkig verbunden. Die Anschraubplatte 12 ist ihrerseits über Schrauben fest mit dem Stützträger 3 verbunden. An seinem hinteren Endabschnitt ist der Scharnierträger 10 über eine Verriegelungseinrichtung 13 in der in den Fig. 1, 5 und 6 dargestellten Position arretiert. Im Abstand d zur Drehachse 11 greift an der Unterseite 14 des Scharnierträgers 10 eine energiespeichernde Einrichtung 15 an. Die energiespeichernde Einrichtung 15 besteht aus einer Schraubendruckfeder 16, die mit einem innenliegenden Kern 17 in eine Aussparung 18 des Stützträgers 3 eingesetzt ist. Am oberen Endabschnitt der Schraubendruckfeder 16 ist ein Verbindungsstück 19 angeordnet, das ein Gelenk 20 zur Verbindung mit dem Scharnierträger 10 aufweist.

Unmittelbar neben der energiespeichernden Einrichtung 15 ebenfalls in der Aussparung 18 des Stützträgers 3 eingesetzt ist ein Mechanismus 21 angeordnet. Der Mechanismus 21 besteht aus einer Schraubenzugfeder 22, die einen Block 23 nach unten zieht. An dem Block 23 ist ein Entriegelungshebel 24 angebracht. Auf der Höhe des unteren Ende des Entriegelungshebels 24 ist in dem Block 23 eine Kulissenbahn 25, in der die Hinterkante 26 der Frontklappe 1 geführt werden kann.

Fig. 1 zeigt die Frontklappe 1 in ihrer geschlossenen Position. Die energiespeichernde Einrichtung 15 befindet sich mit gespannter Schraubendruckfeder 16 in ihrer Ausgangslage. Der Mechanismus 21 befindet sich mit einer größtenteils entspannten Schraubenzugfeder 22 ebenfalls in seiner Ausgangslage und ist über den Entriegelungshebel 24 mit dem Verbindungsstück 19 der energiespeichernden Einrichtung 15 mechanisch gekoppelt.

In Fig. 2 ist die Frontklappe 1 nach einer Kollision des Kraftfahrzeugs mit einem Fußgänger dargestellt. Die energiespeichernde Einrichtung 15 wurde durch ein Öffnen der Verriegelungseinrichtung 13 ausgelöst, die Schraubendruckfeder 16 hat sich schlagartig entspannt und hat die Hinterkante 26 der Frontklappe 1 aus ihrer geschlossenen Ausgangslage in eine angehobene Position verlagert. Der Block 23 des Mechanismus 21 ist über den Entriegelungshebel 24 noch immer mit dem Verbindungsstück 19 verbunden und befindet sich ebenfalls in einer angehobenen Stellung. Die deutlich schwächere Schraubenzugfeder 22 wurde dabei vorgespannt. Aufgrund der Form des Blocks 23 und der Größe der Aussparung 18 kann der Block 23 nicht mehr weiter nach oben bewegt werden und stellt damit einen oberen Anschlag sowohl für den Mechanismus 21 als auch für die energiespeichernde Einrichtung 15 dar.

Nicht immer wenn dieser aktive Fußgängeraufprallschutz ausgelöst wird, muss es tatsächlich zu einem Aufprall eines Fußgängers gekommen sein. Beispielsweise kann der Fußgängeraufprallschutz unter Umständen auch bei einem unvorsichtigen Ein- oder Ausparken ausgelöst werden. Dann ist es wichtig, dass der Fahrer des Kraftfahrzeugs die Frontklappe 1 schnell und problemlos wieder in ihre Ausgangslage bringen kann. Dazu muss der Fahrer die bisher beschriebene Frontklappe 1 nur einmal vollständig öffnen und wieder schließen.

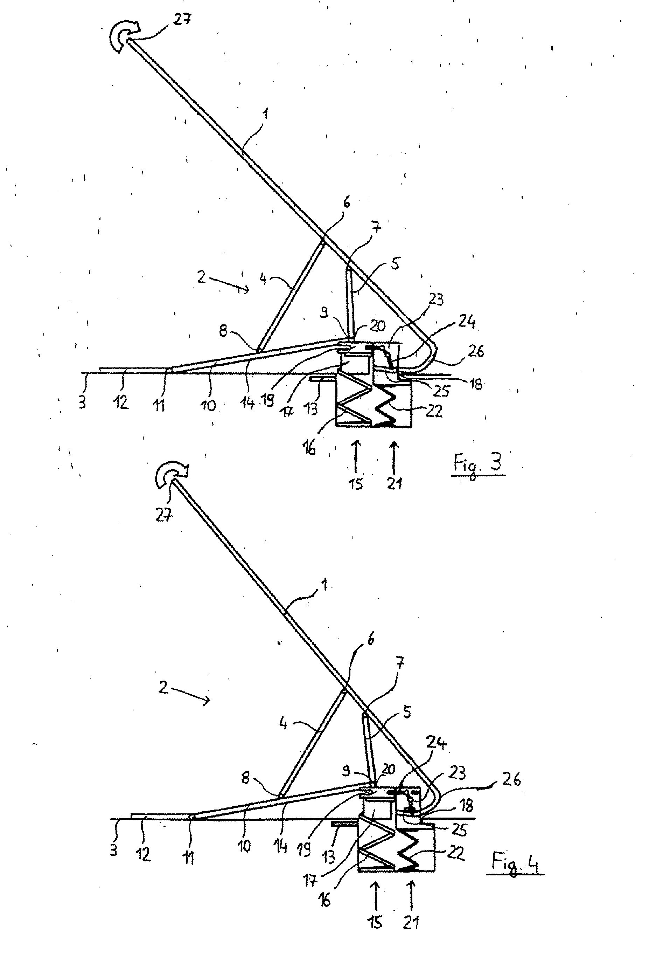

Fig. 3 zeigt die Frontklappe 1 in einer halbgeöffneten Stellung. Sowohl die energiespeichernde Einrichtung 15 als auch der damit gekoppelte Mechanismus 21 befinden sich immer noch am oberen Anschlag. Die Hinterkante 26 der Frontklappe 1 taucht gerade in die Kulissenbahn 25 im Block 23 des Mechanismus 21 ein.

In Fig. 4 befindet sich die Frontklappe 1 in einer fast vollständig geöffneten Stellung. Die Hinterkante 26 der Frontklappe 1 befindet sich in der Kulissenbahn 25 und drückt auf das untere Ende des Entriegelungshebels 24. Dadurch wird der Block 23 des Mechanismus 21 von der energiespeichernden Einrichtung 15 entkoppelt.

Bei einem weiteren Öffnen der Frontklappe 1 bis zu einem Anschlag, wie es in Fig. 5 gezeigt ist, dient die Frontklappe 1 als Hebel, die Hinterkante 26 ist in der Kulissenbahn 25 quasi fest gelagert. Wenn der Fahrer an der Vorderkante 27 der Frontklappe 1 anfassend, diese weiter aufdrückt, wird über den Gelenkarm 5 die energiespeichernde Einrichtung 15 mit der Schraubendruckfeder 16 zusammengedrückt, bis diese in ihrer gespannten Ausgangsstellung wieder verrastet. Dabei dient die Frontklappe 1 als Hebel mit der Hinterkante 26 in der Kulissenbahn 25 als Drehpunkt. Durch das Aufdrücken der Frontklappe 1 mit relativ wenig Kraft aber einem langen Weg wird die energiespeichernde Einrichtung 15 mit der hohen Kraft der Hebelwirkung in ihre Ausgangslage zurückgebracht.

Beim darauf folgenden Schließen der Frontklappe 1 verlässt die Hinterkante 26 der Frontklappe 1, wie in Fig. 6 abgebildet, die Kulissenbahn 25 im Block 23 wieder. Sobald die Hinterkante 26 nicht mehr in der Kulissenbahn 25 geführt ist, wird der Block 23 durch die Schraubenzugfeder 22 wieder in die untere Endlage gezogen. Dort verrastet der Block 23 mit dem Entriegelungshebel 24 im Verbindungsstück 19 der energiespeichernden Einrichtung 15. Damit befindet sich die Frontklappe 1 mit dem aktiven Fußgängeraufprallschutz wieder in einer einsatzbereiten Ausgangslage.

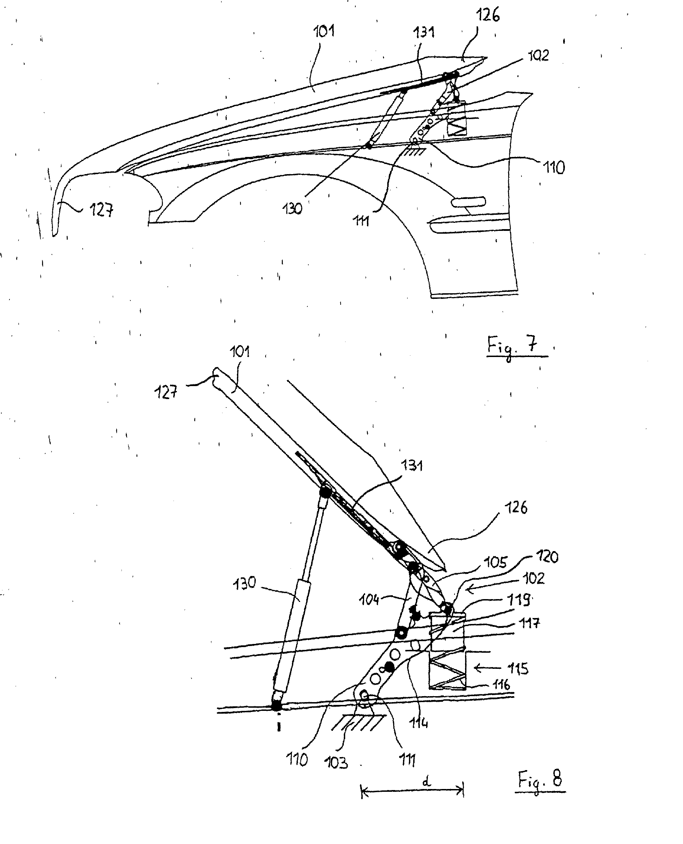

Das Ausführungsbeispiel gemäß den Fig. 7 und 8 zeigt eine zweite, alternative Ausführungsform einer reversiblen Frontklappe 101 in der Seitenansicht. Die Frontklappe 101 ist über ein in seiner Gesamtheit mit 102 bezeichnetem Scharnier an einem Stützträger 103 für einen Kotflügel gelagert. Das Scharnier 102 wird von zwei Gelenkarmen 104 und 105 eines Viergelenks gebildet, die zwischen dem karosserieseitigen Scharnierträger 110 und einem frontklappenseitigen Scharnierträger 131 angeordnet sind. Der frontklappenseitige Scharnierträger 131 ist fest an der Fronklappe 101 angebracht. Der karosserieseitige Scharnierträger 110 ist an seinem vorderen Endabschnitt über eine Drehachse 111 mit dem Stützträger 103 gelenkig verbunden. Im Abstand d zur Drehachse 111 greift an der Unterseite 114 des Scharnierträgers 110 eine energiespeichernde Einrichtung 115 an. Die energiespeichernde Einrichtung 115 besteht aus einer Schraubendruckfeder 116, die mit einem innenliegenden Kern 117 geführt ist. Am oberen Endabschnitt der Schraubendruckfeder 116 ist ein Verbindungsstück 119 angeordnet, das ein Gelenk 120 zur Verbindung mit dem karosserieseitigen Scharnierträger 110 aufweist. Nahe bei dem Scharnier 102 ist eine Gasdruckfeder 130 als Öffnungshilfe der Frontklappe 101 gelenkig zwischen Kotflügel und Frontklappe 101 angeordnet.

Fig. 7 zeigt die Frontklappe 101 in einer geschlossenen Position mit einer angehobenen Hinterkante 126, also mit aktiviertem Fußgängeraufprallschutz. Zum Reversieren des Fußgängeraufprallschutzes muss die Frontklappe 101 geöffnet werden, wie es in Fig. 8 dargestellt ist. Dabei fährt die Gasdruckfeder 130 bis zu einem Anschlag teleskopartig aus. Nach Erreichen des Anschlags dient die Gasdruckfeder 130 als starrer Gelenkarm. Wird die Frontklappe 101 noch weiter geöffnet, fungiert die Anlenkung der Gasdruckfeder 130 als Hebelpunkt. Der lange Hebel wird durch den Abschnitt der Frontklappe 101 zwischen Anlenkung der Gasdruckfeder 130 bis zur Vorderkante 127 gebildet, an der die Handkraft zum Öffnen der Frontklappe 101 ansetzt. Der kurze Hebelarm wird durch den Abschnitt zwischen der Anlenkung der Gasdruckfeder 130 an die Frontklappe 101 und dem Gelenk 120 an der energiespeichernden Einrichtung 115 gebildet. Die an der Vorderkante 127 der Frontklappe 101 angreifende Handkraft erzeugt so per Hebelwirkung die notwendige Kraft zur Reversierung der energiespeichernden Einrichtung 115.

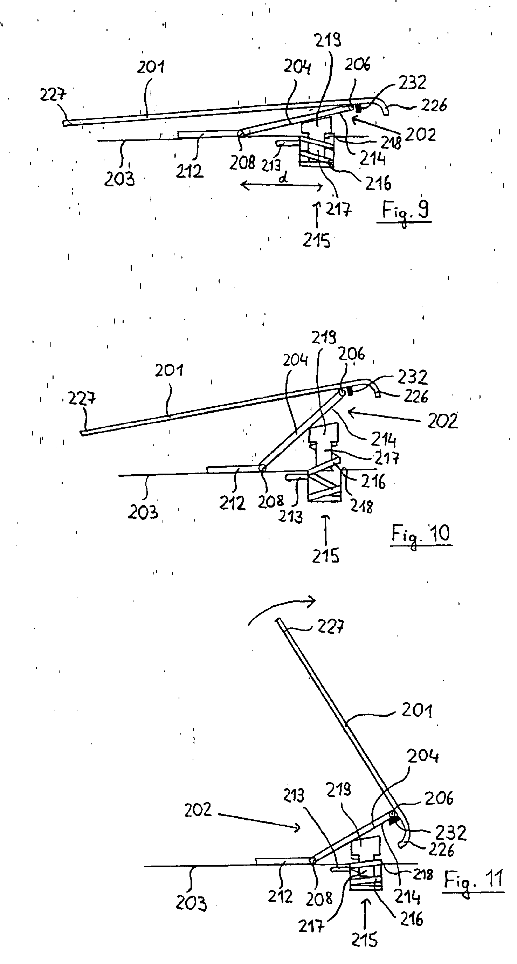

Die Fig. 9 bis 11 zeigen eine dritte mögliche Ausführungsform einer aktiven Frontklappe 201 in der Seitenansicht. Die Frontklappe 201 ist über ein in seiner Gesamtheit mit 202 bezeichneten Scharnier an einem Stützträger 203 für einen nicht dargestellten Kotflügel gelagert. Das Scharnier 202 ist als Zweigelenk mit einem Gelenkarm 204 ausgebildet. Der Gelenkarm 204 ist einerseits über ein Gelenk 206 an der Frontklappe 201 und andererseits über ein Gelenk 208 an einer Anschraubplatte 212 angelenkt. Die Anschraubplatte 212 ist ihrerseits über Schrauben fest mit dem Stützträger 203 verbunden. Unmittelbar hinter dem Gelenk 206 ist an der Unterseite der Frontklappe ein Scharnieranschlag 232 angebracht, der den maximalen Schwenkbereich des Gelenks 206 begrenzt. Im Abstand d zum Gelenk 208 greift an der Unterseite 214 des Gelenkarms 204 eine energiespeichernde Einrichtung 215 an. Die energiespeichernde Einrichtung 215 besteht aus einer Schraubendruckfeder 216, die mit einem innenliegenden Kern 217 in eine Aussparung 218 des Stützträgers 203 eingesetzt ist. Am oberen Endabschnitt der Schraubendruckfeder 216 ist ein Verbindungsstück 219 angeordnet, das durch die Schraubendruckfeder 216 auf den Gelenkarm 204 gedrückt wird, sobald eine Verriegelungseinrichtung 213 geöffnet wird.

In Fig. 9 ist die Frontklappe 201 in der geschlossenen Ausgangslage dargestellt. Die energiespeichernde Einrichtung 215 befindet sich mit gespannter Schraubendruck-feder 216 in ihrer Ausgangslage. Fig. 10 zeigt die Frontklappe 201 nach einer Kollision mit einem Fußgänger. Die Verriegelungseinrichtung 213 wurde geöffnet, so dass die Schraubendruckfeder 216 sich schlagartig entspannt hat und dadurch über das Verbindungsstück 219 und über den Gelenkarm 204 eine Hinterkante 226 der Frontklappe 201 nach oben verlagert hat. Fig. 11 schließlich zeigt die Frontklappe 201 in einer halbgeöffneten Stellung nach einer Fehlauslösung des Fußgängeraufprallschutzes. Beim normalen Öffnen der Frontklappe 201 schwenkt diese primär um das Gelenk 206 an der Frontklappe 201. Diese Schwenkbewegung ist allerdings durch den Scharnieranschlag 232 begrenzt, an den ab einem gewissen Öffnungswinkel der Frontklappe 201 der Gelenkarm 204 stößt. Bei einem weiteren Öffnen der Frontklappe 201 muss die Verschwenkung um das Gelenk 208 erfolgen. Dabei wird über den Gelenkarm 204 die energiespeichernde Einrichtung 215 nach unten gedrückt, bis diese wieder in ihrer gespannten Ausgangslage verrastet. Aufgrund des langen Hebelarms, an dessen Ende an einer Vorderkante 227 der Frontklappe 201 die Handkraft angreift, ist diese Reversierung der energiespeichernden Einrichtung mit relativ geringem Kraftaufwand möglich. Allerdings muss die Vorderkante 227 von Hand über einen relativ langen Weg bewegt werden.

## Patentansprüche

1. Anordnung einer Frontklappe (1, 101) an einem Fahrzeug mit einer Einrichtung (15, 115), die sich bei einer Kollision des Fahrzeugs mit einem Fußgänger aus einer geschlossenen Ausgangslage in eine angehobene Position verlagert, und dabei zumindest eine Hinterkante (26) der Frontklappe (1, 101) anhebt, und die benachbart zu einem Scharnier (2) an der Karosserie angebracht ist, das zumindest ein nach oben Schwenken der Frontklappe (1, 101) beim normalen Öffnen um eine in Fahrtrichtung gesehen im hinteren Bereich der Frontklappe (1, 101) angeordnete Achse ermöglicht, wobei ein Mechanismus (21) zur Rückführung der Einrichtung (15, 115) aus der angehobenen Position in die geschlossene Ausgangslage vorgesehen ist, **dadurch gekennzeichnet, dass** der Mechanismus bei einem normalen Öffnen der an der Hinterkante (26) angehobenen Frontklappe (1, 101) eine weitere Anlenkung (25, 26, 130) der an der Hinterkante (26) angehobenen Frontklappe (1, 101) an die Karosserie schafft, und der Abschnitt der Frontklappe (1, 101) zwischen dieser weiteren Anlenkung (25, 26, 130) und einer Vorderkante (27, 127), an der eine Handkraft zum Öffnen und / oder Schließen eingeleitet wird, als langer Hebel für den Mechanismus (21) dient.

2. Anordnung einer Frontklappe nach Anspruch 1, **dadurch gekennzeichnet, dass** das Scharnier (2) vor einer Hinterkante (26) der Frontklappe (1) angeordnet ist, und dass der Mechanismus (21) einen Eingriff (25) aufweist, durch die eine Hinterkante (26) der Frontklappe (1) beim normalen Öffnen zusätzlich geführt wird und so die Anlenkung (25, 26) des durch die Frontklappe (1) gebildeten Hebels darstellt.

3. Anordnung einer Frontklappe nach Anspruch 2, **dadurch gekennzeichnet, dass** der Eingriff (25) als Kulissenbahn (25) ausgebildet ist.

4. Anordnung einer Frontklappe nach mindestens einem der Ansprüche 2 oder 3, **dadurch gekennzeichnet, dass** das Scharnier (2) ein Viergelenk ist, dessen beide Gelenkarme (4, 5) hintereinander an der Frontklappe (1) und in der gleichen Reihenfolge hintereinander an einem Scharnierträger (10) angelenkt sind, der an seinem vorderen Endabschnitt über eine Drehachse (11) mit der Karosserie gelenkig verbunden ist und über ein weiteres Gelenk (20) mit der Einrichtung (15) verbunden ist.

5. Anordnung einer Frontklappe nach Anspruch 1, **dadurch gekennzeichnet, dass** die Frontklappe (101) eine sowohl klappen- als auch karosserieseitig vor dem Scharnier (102) angelenkte Öffnungshilfe (130) aufweist, die in ihrem vollständig geöffneten Zustand als Anlenkung des durch die Frontklappe (101) gebildeten Hebels dient.

6. Anordnung einer Frontklappe nach Anspruch 5, **dadurch gekennzeichnet, dass** die Öffnungshilfe (130) eine Gasfeder (130) ist, die gegebenenfalls zusätzlich noch eine mechanische Feder aufweist.

7. Anordnung einer Frontklappe an einem Fahrzeug mit einer Einrichtung, die sich bei einer Kollision des Fahrzeugs mit einem Fußgänger aus einer geschlossenen Ausgangslage in eine angehobene Position verlagert, und dabei zumindest eine Hinterkante der Frontklappe anhebt, und die benachbart zu einem Scharnier an der Karosserie angebracht ist, das zumindest ein nach oben Schwenken der Frontklappe beim normalen Öffnen um eine in Fahrtrichtung gesehen im hinteren Bereich der Frontklappe angeordnete Achse ermöglicht, **dadurch gekennzeichnet, dass** das Scharnier in einem Gelenk (206) zur Frontklappe (201) einen begrenzten Schwenkbereich hat, so dass bei einem weiteren normalen Öffnen der an der Hinterkante (26) angehobenen Frontklappe (201) per Handkraft über den begrenzten Schwenkbereich hinaus zumindest ein über das Gelenk (206) angelenkter Gelenkarm (204) des Scharniers (202) mit der Frontklappe (201) zwangsweise mitbewegt wird und so auf die Einrichtung (215) wirkt, dass diese aus der angehobenen Position in die geschlossene Ausgangslage zurückgeführt wird.

8. Anordnung einer Frontklappe nach Anspruch 7, **dadurch gekennzeichnet, dass** das Scharnier (202) ein Zweigelenk ist, dessen Gelenkarm (204) an der Frontklappe (201) und an einer fest mit der Karosserie verbundenen Anschraubplatte (212) angelenkt ist.

## Claims

1. An arrangement of a front bonnet (1, 101) on a vehicle, comprising a device (15, 115) which is displaced from a closed starting position in to a lifted position in the event of a collision of the vehicle with a pedestrian, and, in this case, lifts at least a rear edge (26) of the front bonnet (1, 101), and which is attached to the body adjacent to a hinge (2), which hinge allows at least an upward pivoting of the front bonnet (1, 101) during normal opening about a pin arranged in the rear region of the front bonnet (1, 101), viewed in direction of travel, wherein a mechanism (21) is provided to return the device (15, 115) from the lifted position into the closed starting position, **characterised in that** the mechanism, during a normal opening of the front bonnet (1, 101) lifted at the rear edge (26) provides a further articulation (25, 26, 130) of the front bonnet (1, 101) lifted at the rear edge, to the body, and the section of the front bonnet (1, 101) between this further articulation (25, 26, 130) and a front edge (27, 127), at which a manual force is introduced for opening and/or closing, is used as a long lever for the mechanism (21).

2. An arrangement of a front bonnet according to claim 1, **characterised in that** the hinge (2) is arranged in front of a rear edge (26) of the front bonnet (1), and **in that** the mechanism (21) has an engagement device (25), by means of which a rear edge (26) of the front bonnet (1) is additionally guided during normal opening and is thus the articulation (25, 26) of the lever formed by the front bonnet (1).

3. An arrangement of a front bonnet according to claim 2, **characterised in that** the engagement device (25) is configured as a link path (25).

4. An arrangement of a front bonnet according to at least one of claims 2 or claim 3, **characterised in that** the hinge (2) is a four-bar linkage, the two joint arms (4, 5) of which are linked one behind the other on the front bonnet (1), and in the same order one behind the other on a hinge carrier (10), which, at its front end section, is connected in an articulated manner to the body via a pivot pin (11) and is connected to the device (15) via a further joint (20).

5. An arrangement of a front bonnet according to claim 1, **characterised in that** the front bonnet (101) has an opening aid (130) which is linked both on the bonnet side and on the body side in front of the hinge (102) and, in its fully opened state, is used as an articulation of the lever formed by the front bonnet (101).

6. An arrangement of a front bonnet according to claim 5, **characterised in that** the opening aid (130) is a gas spring, which optionally additionally also has a mechanical spring.

7. An arrangement of a front bonnet on a vehicle with a device, which, in the event of a collision of the vehicle with a pedestrian, is displaced from a closed starting position into a lifted position, and, in this case, at least lifts a rear edge of the front bonnet, and which is attached, adjacent to a hinge, to the body, which hinge allows at least an upward pivoting of the front bonnet during normal opening about a pin arranged in the rear region of the front bonnet, viewed in the direction of travel, **characterised in that** the hinge has a limited pivoting range in a joint (206) to the front bonnet (201), so that during a further normal opening of the front bonnet (201) lifted at the rear edge (26) by manual force beyond the limited pivoting range, at least one joint arm (204) of the hinge (202) linked via the joint (206) is forcibly moved with the front bonnet (201) and acts on the device (215) such that the latter is returned from the lifted position into the closed starting position.

8. An arrangement of a front bonnet according to claim 7, **characterised in that** the hinge (202) is a double joint, the joint arm (204) of which is linked to the front bonnet (201) and to a screw-on plate (212) connected to the body.

## Revendications

1. Dispositif de capot avant (1, 101) pour véhicule avec un dispositif (15, 115) qui, en cas de collision du véhicule avec un piéton, passe d'une position de départ fermée à une position relevée, et relève ainsi au moins un bord arrière (26) du capot avant (1, 101), et qui est monté sur la carrosserie au voisinage d'une charnière (2) qui permet lors de l'ouverture normale du capot avant, au moins un pivotement vers le haut du capot avant (1, 101) autour d'un axe disposé dans la région arrière du capot avant (1, 101), vu dans le sens du déplacement, avec un mécanisme (21) pour ramener le dispositif (15, 115) de la position relevée à la position de départ fermée,
**caractérisé en ce que**
lors d'une ouverture normale du capot avant (1, 101) relevé au niveau du bord arrière (26) le mécanisme crée, une articulation supplémentaire (25, 26, 130) du capot avant (1, 101) relevé au niveau du bord arrière (26) sur la carrosserie, et le segment du capot avant (1, 101) situé entre cette articulation supplémentaire (25, 26, 130) et un bord avant (27, 127) recevant une force manuelle pour ouvrir et/ou fermer, sert de bras de levier long pour le mécanisme (21).

2. Dispositif de capot avant selon la revendication 1,
**caractérisé en ce que**
la charnière (2) est disposée devant un bord arrière (26) du capot avant (1) et le mécanisme (21) présente une prise (25) guidant en plus un bord arrière (26) du capot avant (1) lors de l'ouverture normale, et constitue ainsi l'articulation (25, 26) du bras de levier formé par le capot avant (1).

3. Dispositif de capot avant selon la revendication 2,
**caractérisé en ce que**
la prise (25) est une coulisse (25).

4. Dispositif de capot avant selon au moins une des revendications 2 et 3,
**caractérisé en ce que**
la charnière (2) est un quadrilatère articulé dont les deux bras articulés (4, 5) sont articulés l'un derrière l'autre sur le capot avant (1) et, dans le même ordre, l'un derrière l'autre sur un support de charnière (10) relié de manière articulée au niveau de son segment d'extrémité avant par un axe de rotation (11) avec la carrosserie et est relié par une autre articulation (20) avec le dispositif (15).

5. Dispositif de capot avant selon la revendication 1,
**caractérisé en ce que**
le capot avant (101) présente un accessoire d'ouverture (130) articulé devant la charnière (102) aussi bien du côté capot que du côté carrosserie, qui, dans sa position entièrement ouverte, fait office d'articulation du levier formé par le capot avant (101).

6. Dispositif de capot avant selon la revendication 5,
**caractérisé en ce que**
l'accessoire d'ouverture (130) est un ressort pneumatique (130) qui présente en outre le cas échéant un ressort mécanique.

7. Dispositif de capot avant pour véhicule avec un dispositif qui, en cas de collision du véhicule avec un piéton, passe d'une position de départ fermée à une position relevée, et relève ainsi au moins un bord arrière du capot avant, et qui est monté sur la carrosserie au voisinage d'une charnière qui permet, lors de l'ouverture normale, au moins un pivotement vers le haut du capot avant autour d'un axe disposé dans la région arrière du capot avant, vu dans le sens du déplacement,
**caractérisé en ce que**
la charnière possède une plage de pivotement limitée dans une articulation (206) par rapport au capot avant (201), de sorte que, lors de la poursuite d'une ouverture normale manuelle du capot avant (201) relevé au niveau du bord arrière (26) au-delà de la plage de pivotement limitée, au moins un bras articulé (204) de la charnière (202) articulé par l'articulation (206) est obligatoirement mû avec le capot avant (201) et agit alors sur le dispositif (215) de sorte que celui-ci revient de la position relevée à la position de départ fermée.

8. Dispositif de capot avant selon la revendication 7,
**caractérisé en ce que**
la charnière (202) est un dispositif biarticulé dont le bras articulé (204) est articulé sur le capot avant (201) et sur une plaque à visser (212) solidarisée avec la carrosserie.
